# EUROPÄISCHE PATENTANMELDUNG

(11) **EP 2 412 512 A2**
(43) Veröffentlichungstag der Anmeldung: **01.02.2012**
(21) Anmeldenummer: 11175316.6
(22) Anmeldetag: 26.07.2011
(51) Int. Cl.: B29C 49/42, B29C 49/12

(54) **Streckblasmaschine mit integriertem Kompressor**

(30) Priorität: 30.07.2010 DE 102010032965
(71) Anmelder: Krones AG, 93073 Neutraubling (DE)
(72) Erfinder: Rossmann, Stefan, 93077 Bad Abbach (DE); Voth, Klaus, 93083 Obertraubling (DE); Christiansen, Peter, 22453 Hamburg (DE)
(74) Vertreter: Hannke, Christian

(57) **Zusammenfassung**

Vorrichtung (1) zum Umformen von Kunststoffvorformlingen zu Kunststoffbehältnissen mit mindestens einer Blasstation (8), die einen Hohlraum ausbildet, in dessen Innerem die Kunststoffvorformlinge zu Kunststoffbehältnissen (10) umformbar sind, mit einer Druckluftzuführung, welche wenigstens einem Element der Blasstation (8) die Druckluft zuführt und mit einer Kompressoreinrichtung (4) zur Erzeugung der Druckluft. Erfindungsgemäß ist die Kompressoreinrichtung (4) derart in einer Umgebung der Vorrichtung (1) angeordnet, dass eine Strömungsverbindung (6) zwischen der Kompressoreinrichtung (4) und der Blasstation (8) kürzer als 15m.

## Beschreibung

Die vorliegende Erfindung betrifft ein Verfahren zur Blasformung von Behältern, insbesondere von Kunststoffbehältern, bei dem ein Kunststoffvorformling aus einem thermoplastischen Material, insbesondere nach einer thermischen Konditionierung entlang eines Transportweges im Bereich einer Heizstrecke innerhalb einer Blasform durch Drucklufteinwirkung in einen Behälter umgeformt wird. Derartige Verfahren und entsprechende Vorrichtungen sind aus dem Stand der Technik seit langem bekannt. Die Erfindung betrifft weiterhin eine Vorrichtung zur Blasformung von Behältern aus einem thermoplastischen Material, bei dem ein Kompressor in der Streckblasmaschine Druckluft erzeugt, wobei diese Druckluft für die Verwendung von pneumatischen Verbrauchern und/oder auch zum Umformen der Kunststoffvorformlinge in die Behälter dient.

Aus der DE 20 2005 020 679 U1 ist ein Blasformverfahren zum Herstellen von Höhlkörpern aus Kunststoffmaterial, sowie eine Vorrichtung und eine Installation zur Durchführung dieses Verfahrens vorgesehen.

Ein wesentliches Problem bei dieser Umformung ist dabei der hohe Druckluftverbrauch derartiger Streckblasmaschinen. Üblicherweise wird die Druckluft über einen externen Kompressor erzeugt, wobei dieser Kompressor häufig einen Druck von bis zu 40 bar erzeugt und dieses hohe Druckniveau anschließend der Streckblasmaschine zugeführt wird. In der Maschine selbst wird dann dieser Druck auf die erforderlichen Drücke, beispielsweise zum Vorblasen oder zum Fertigblasen der Kunststoffbehältnisse, reduziert. So kann beispielsweise ein erstes Druckniveau zwischen 6 und 25 bar liegen und ein zweites Druckniveau zwischen 25 und 40 bar. Zusätzlich wird für die Steuerventile der Vorrichtung ein Druck von konstant 10 bar benötigt, wobei je nach Ventilen dieser Druck auch geringer sein kann.

Teilweise fährt während des Umformens auch pneumatisch eine Reckstange in den Behälter, um den Umformvorgang zu unterstützen. Der entsprechende Pneumatik-Zylinder weist dabei ein Druckniveau von 8 bar beim Einfahren und beim Herausfahren einen Druck von 3 bis 8 bar auf.

Der vorliegenden Erfindung liegt die Aufgabe zugrunde, ein Verfahren und eine Vorrichtung zur Verfügung zu stellen, durch welche der Energieaufwand für die Druckluftversorgung reduziert wird. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Blasstation auf, die einen Hohlraum ausbildet, unterhalb dessen die Kunststoffvorformlinge zu Kunststoffbehältnissen umformbar sind. Weiterhin ist eine Druckluftzuführung vorgesehen, welche wenigstens einem Element der Blasstation Druckluft zuführt, und ferner ist eine Kompressoreinrichtung zur Erzeugung der Druckluft vorgesehen.

Erfindungsgemäß ist die Kompressoreinrichtung derart in einer Umgebung der Vorrichtung angeordnet, dass eine Strömungsverbindung zwischen der Kompressoreinrichtung und der Blasstation geringer als 15 m ist.

Es wird damit vorgeschlagen, dass sich die Kompressoreinrichtung in und/oder an der Streckblasmaschine bzw. in und/oder an einem Bereich der Streckblasmaschine befindet und diese Kompressoreinrichtung wenigstens einen Teil der notwendigen pneumatischen Verbraucher mit Druckluft versorgt. So wäre es möglich, dass ein geometrischer Abstand zwischen der Streckblasmaschine bzw. Elementen derselben und der Kompressoreinrichtung kleiner als 10m, bevorzugt kleiner als 8m, bevorzugt kleiner als 6m und besonders bevorzugt kleiner als 5m ist. Bei aus dem Stand der Technik bekannten Vorrichtungen werden die Kompressoren üblicherweise weit entfernt von der eigentlichen Streckblasmaschine angeordnet und über sehr lange Leitungen mit dieser verbunden.

Durch das Vorsehen der vergleichsweise kurzen Strömungsverbindung bzw. durch kurze Leitungen kann Druck und damit Energie eingespart werden. Vorzugsweise handelt es sich bei der Vorrichtung zum Umformen von Kunststoffvorformlingen um eine sogenannte Streckblasmaschine, welche auch eine Reckstange aufweist, welche die Behältnisse in deren Längsrichtung dehnt. Der Hohlraum wird dabei vorteilhaft innerhalb einer Blasform ausgebildet, wobei die Kunststoffvorformlinge gegen eine Innenwandung dieser Blasform expandiert werden.

Bei dem besagten Element der Blasstation kann es sich beispielsweise um eine Blasdüse handeln, welche die Kunststoffvorformlinge mit Druckluft beaufschlagt. Daneben kann es sich jedoch auch um eine Reckstange handeln, die pneumatisch bewegt wird. Daneben wäre es auch möglich, die Druckluft zum Schalten von Ventilen zu verwenden. Vorteilhaft werden mehrere Verbraucher der Vorrichtung mit Druckluft versorgt.

Vorteilhaft weist die Vorrichtung eine Heizeinrichtung auf, welche in einer Transportrichtung der Kunststoffvorformlinge stromaufwärts bezüglich der Vorrichtung zum Umformen angeordnet ist, wobei die Kunststoffvorformlinge durch diese Heizeinrichtung hindurch transportiert werden. Auf diese Weise ist eine thermische Konditionierung entlang des Transportweges in dem Bereich dieser Heizstrecke möglich. Vorteilhaft ist damit die Kompressoreinrichtung in der Blasformmaschine selbst angeordnet, beispielsweise in einem beweglichen Bereich der Blasmaschine, wie einem Blasrad, oder auch in dessen Umgebung in einem stationären Teil der Blasmaschine. So kann die Kompressoreinrichtung auch neben dem Blasrad vorgesehen sein.

Vorteilhaft weist die Vorrichtung eine Vielzahl von Blasstationen auf, welche an einem bewegbaren und besonders bevorzugt drehbaren Träger angeordnet sind und die Kompressoreinrichtung versorgt mehrere dieser Blasstationen und bevorzugt sämtliche dieser Blasstationen mit Druckluft. Bei dieser Ausführungsform befindet sich die Kompressoreinrichtung auf dem Blasrad und versorgt die pneumatischen Verbraucher, die sich ebenfalls auf dem Blasrad befinden, mit Druckluft. Damit ist bei dieser Ausführungsform die Kompressoreinrichtung an dem drehbaren Träger angeordnet und bewegt sich mit. Es wäre jedoch auch möglich, dass die Kompressoreinrichtung an einem stehenden Teil der Blasformmaschine angeordnet ist. Bei dieser drehbaren Trägereinrichtung kann es sich beispielsweise um ein sogenanntes Blasrad handeln, an dem die einzelnen Blasstationen angeordnet sind

Bei einer weiteren vorteilhaften Ausführungsform wird die Kompressoreinrichtung durch eine Drehbewegung des Trägers angetrieben. Dabei ist es möglich, dass das Blasrad über eine Kugeldrehverbindung gelagert ist und die Kompressoreinrichtung über diese Kugeldrehverbindung angetrieben wird. Bei dieser Ausführungsform kann die Kompressoreinrichtung selbst sowohl stationär als auch beweglich angeordnet sein.

Bei einer weiteren Ausführungsform weist die Kompressoreinrichtung einen eigenen Antrieb beispielsweise in Form eines Elektromotors auf. Es wäre jedoch auch möglich, dass die Kompressoreinrichtung durch die Bewegungen anderer Transporteinrichtungen wie beispielsweise die Bewegungen von Zuführsternen oder Abführsternen angetrieben wird. Diese Zuführsterne führen vorteilhaft die Kunststoffvorformlinge der Streckblasmaschine zu. Die Abführsterne führen die Behältnisse von der Streckblasmaschine ab.

Allgemein wird vorteilhaft die Kompressoreinrichtung durch eine Transportbewegung der Vorrichtung angetrieben, d.h. durch die Bewegung wenigstens eines Elements der Vorrichtung, welche eine Bewegung der Kunststoffvorformlinge oder der daraus hergestellten Behältnisse bewirkt.

Bei einer weiteren vorteilhaften Ausführungsform weist wenigstens eine Blasstation eine Reckstange zum Dehnen der Kunststoffvorformlinge auf und eine Bewegung dieser Reckstange wird wenigstens teilweise durch von der Kompressoreinrichtung erzeugte Druckluft angetrieben. Unter erzeugter Druckluft wird dabei verstanden, dass Luft unter einem gegenüber der Atmosphäre erhöhtem Druck, insbesondere einem Druck im Bereich von 10 bis 40 bar erzeugt wird.

Bei einer weiteren vorteilhaften Ausführungsform versorgt die Kompressoreinrichtung wenigstens ein Steuerventil, bevorzugt mehrere Steuerventile und besonders bevorzugt alle Steuerventile mit Druckluft. Dieses Steuerventil kann dabei die Druckluftzufuhren in das Behältnis steuern.

Bei einer weiteren vorteilhaften Ausführungsform liefert die Kompressoreinrichtung Blasluft zum Expandieren der Kunststoffvorformlinge. Dabei ist es möglich, dass die Kompressoreinrichtung Blasluft zum Vorblasen der Kunststoffvorformlinge auf einem ersten Druckniveau liefert, es wäre jedoch auch möglich, dass die Kompressoreinrichtung Blasluft zum Fertigblasen der Kunststoffvorformlinge liefert.

Bei einer weiteren vorteilhaften Ausführungsform weist die Vorrichtung eine weitere Kompressoreinrichtung auf, wobei eine Strömungsverbindung zwischen dieser weiteren Kompressoreinrichtung und der oben beschriebenen Kompressoreinrichtung besteht. Insbesondere ist dabei wenigstens eine dieser beiden Kompressoreinrichtungen näher als 15 m an wenigstens einer Blasstation angeordnet. Es wird jedoch darauf hingewiesen, dass hier beschriebene Variante mit den zwei Kompressoreinrichtungen auch unabhängig von dem oben beschriebenen Abstand von weniger als 15 m zu der Blasstation denkbar ist. Die Anmelderin behält sich vor, auf die Ausführungsform separat Schutz zu beanspruchen.

Bei einer weiteren vorteilhaften Ausführungsform stellen die erste und die weitere Kompressoreinrichtung unterschiedliche Ausgangsdrücke zur Verfügung. So ist es möglich, dass die weitere Kompressoreinrichtung einen bestimmten Grunddruck zur Verfügung stellt, der anschließend von der oben erwähnten Kompressoreinrichtung verstärkt wird. Die erwähnte weitere Kompressoreinrichtung dient bei dieser Ausgestaltung als Kompressoreinrichtung, welche einen bestimmten Grunddruck zur Verfügung stellt und die oben beschriebene Kompressoreinrichtung verstärkt diesen. Letztgenannte Kompressoreinrichtung kann dabei auch als Booster bezeichnet werden, d.h. ein Kompressor, welcher nicht von atmosphärischem Druck aus verdichtet, sondern von einem gewissen Druckluftniveau, wie zum Beispiel 6 bar. Der Vorteil dieser Anordnung besteht darin, dass diese Booster keine verschmutzte Fremdluft aus der Umgebung ansaugen, da die Druckluftversorgung direkt durch das Luftrecycling bzw. die Fehlmenge aus dem Niederdrucknetz erfolgt. Dies ist ein Vorteil gegenüber Standardkompressoren.

Weiterhin kann auf diese Weise die doppelte Verrohrung eingespart werden, da beim Druckluftrecycling eine Rohrleitung direkt von der Streckblasmaschine in den Booster zurückgelegt werden kann.

Bei einer weiteren vorteilhaften Ausführungsform ist damit wenigstens eine zur Zurückführung von Luft dienende Leitung zwischen wenigstens einer Blasstation und wenigstens einer Kompressoreinrichtung vorgesehen.

Bei einer weiteren vorteilhaften Ausführungsform ist es auch denkbar, dass zwei oder mehrere Rückführungsleitungen von den Blasstationen zu wenigstens einer Kompressoreinrichtung geführt sind. So kann beispielsweise eine Rückspeisung eines Drucks von 10 bis 13 bar von der Blasmaschine in die oben erwähnte Kompressoreinrichtung erfolgen und zusätzlich mit einer weiteren Leitung eine Rückspeisung von einem Druckniveau zwischen 4 und 7 bar von der Blasmaschine bzw. den Blasstationen in wenigstens eine Kompressoreinrichtung. Dabei ist es möglich, dass ein kleinerer Rückspeisedruck von beispielsweise 5 bis 7 bar vor einer ersten Stufe der Kompressoreinrichtung, d.h. des Boosters, eingespeist wird. Bei diesem Booster kann es sich dabei um einen Kolben oder einen Turbokompressor handeln. Weitere Drücke können in den nachfolgenden Stufen eingespeist werden, beispielsweise 15 bar zwischen der ersten und zweiten Stufe. Bei einer vorteilhaften Ausführungsform erfolgt diese Rückspeisung nicht in die Druckluftleitung zwischen der ersten und zweiten Stufe, sondern in einen zwischengeschalteten Niederdrucktank. Es wird damit hier vorgeschlagen, dass ein Druckluftrecycling vorgenommen wird, bei welchem mehrere verschiedene Rückspeisedrücke zugrunde gelegt werden.

Bei einer weiteren vorteilhaften Ausführungsform wird die Kompressoreinrichtung beispielsweise neben einer Streckblasmaschine aufgestellt. An einem Einlass dieser Kompressoreinrichtung wird vorteilhaft ein Drucklufttank angeordnet, der durch Recyclingprozesse der Streckblasmaschine versorgt werden kann. Bei einem Druckabfall unter einem einstellbaren Minimaldruck (Druck min.) wird die zusätzlich benötigte Luft durch den oben erwähnten Niederdruckkompressor, d.h. die weitere Kompressoreinrichtung geliefert. Die Einstellungen am Drucklufttank werden dabei vorteilhaft so festgelegt, dass primär recycelte Luft aus der Blasmaschine verwendet wird. Sekundär wird der restliche Bedarf aus dem Niederdrucknetz, d.h. durch die weitere Kompressoreinrichtung zur Verfügung gestellt.

Bei einer weiteren vorteilhaften Ausführungsform können Druckluft-Hysteresen an diesem Drucklufttank eingestellt werden. Die Regelung kann dabei vorteilhaft durch druckabhängige Ventile erfolgen.

Die vorliegende Erfindung ist weiterhin auf ein Verfahren zum Umformen von Kunststoffvorformlingen zu Kunststoffbehältnissen gerichtet, wobei die Kunststoffvorformlinge innerhalb wenigstens einer Blasstation mit Druckluft beaufschlagt und zu den Kunststoffbehältnissen umgeformt werden und wobei der Blasstation Druckluft zugeführt wird und eine Kompressoreinrichtung die Druckluft erzeugt.

Erfindungsgemäß wird die Druckluft ausgehend von der Kompressoreinrichtung bzw. zwischen der Kompressoreinrichtung und der Blasstation entlang einer Strömungsverbindung geführt, die kleiner als 15m ist. Vorteilhaft ist die Strömungsverbindung kleiner als 12 m, besonders bevorzugt kleiner als 10 m und besonders bevorzugt kleiner als 8 m. Bei dieser Strömungsverbindung kann es sich beispielsweise um eine Druckluftleitung handeln, welche von der Kompressoreinrichtung zu den Blasstationen bzw. zu dem zu betätigenden Element reicht. Es wäre auch möglich, dass die Strömungsverbindung von der Kompressoreinrichtung in einen Verteilerkanal führt, der wiederum eine Vielzahl von Blasstationen mit Druckluft versorgt. Damit wird bevorzugt die Druckluft einer Zentralleitung zugeführt und von der Zentralleitung an eine Vielzahl von Blasstationen geführt.

Vorteilhaft wird die Kompressoreinrichtung durch eine Transportbewegung der Blasstation angetrieben. Dabei kann es sich beispielsweise um eine Drehbewegung des Blasrades handeln, welche wiederum die Kompressoreinrichtung antreibt.

Bei einem weiteren vorteilhaften Verfahren versorgt wenigstens eine weitere Kompressoreinrichtung die oben erwähnte Kompressoreinrichtung mit Druckluft. Dabei wird vorteilhaft Druckluft aus der Blasmaschine zu wenigstens einer Kompressoreinrichtung und bevorzugt zu der bereits eingangs beschriebenen Kompressoreinrichtung rückgeführt. Dabei ist es vorteilhaft möglich, diese Druckluft auf wenigstens zwei unterschiedliche Druckniveaus zurückzuführen.

Bei einer weiteren vorteilhaften Ausführungsform weist die Umformungseinrichtung eine Temperiereinrichtung auf, um Bestandteile der Umformungseinrichtung zu temperieren. Dabei steht diese Temperiereinrichtung vorteilhaft auch in Strömungsverbindung mit mindestens einer Kompressoreinrichtung. Derzeit werden die Kühlanlagen und Temperiergeräte von Kompressoren und Streckblasmaschinen separat temperiert. Bei dieser Ausführungsform wird vorgeschlagen, Abwärme sowie Kälte von Maschinen, wie beispielsweise dem Kompressor und der Streckblasmaschine zu nutzen, um andere Prozesse damit zu versorgen. So wäre es beispielsweise möglich, dass bei Streckblasmaschinen mit Temperiergeräten, wie beispielsweise für einen Hotfill oder ähnlichen Prozess, das Kühlwasser des Kompressors genutzt wird, um die Medien im Temperiergerät aufzuheizen. Auch wäre es möglich, das kältere Kühlwasser der Streckblasmaschine zu nutzen, um das Kühlwasser des Kompressors zu kühlen.

Weitere Vorteile und Ausführungsformen ergeben sich aus den beigefügten Zeichnungen:

Darin zeigen:
- Fig. 1: eine schematische Darstellung einer erfindungsgemäßen Vorrichtung in einer ersten Ausführungsform;
- Fig. 2: eine erfindungsgemäße Vorrichtung in einer zweiten Ausführungsform;
- Fig. 3: eine erfindungsgemäße Vorrichtung in einer dritten Ausführungsform;
- Fig. 4: eine Ansicht einer Anlage mit einer erfindungsgemäßen Vorrichtung; und
- Fig. 5: eine weitere Ausführungsform einer erfindungsgemäßen Anlage.

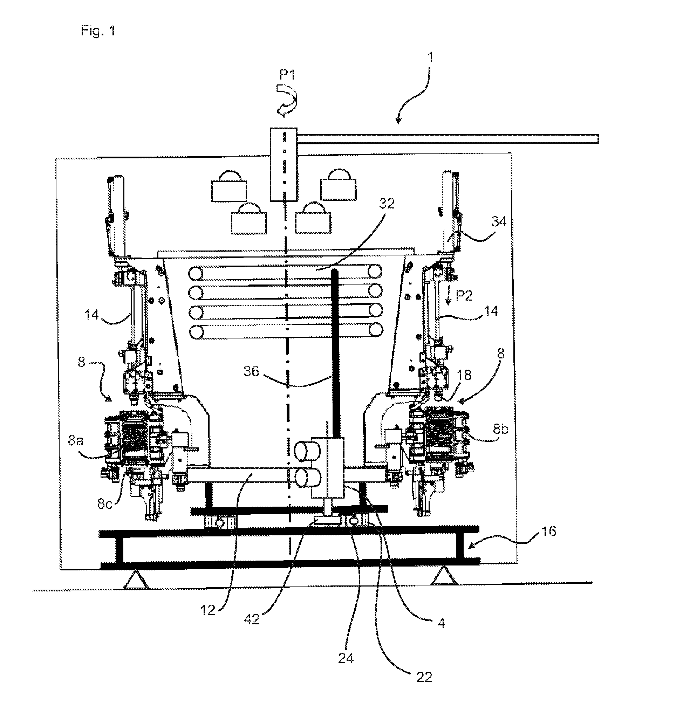

Fig. 1 zeigt eine erfindungsgemäße Vorrichtung 1 in einer ersten Ausführungsform. Dabei ist ein Blasrad 12 drehbar gegenüber einem Träger 16 angeordnet. Das Blasrad 12 wird von einer Antriebseinrichtung drehend (Pfeil P1) angetrieben. An diesem Blasrad 12 ist eine Vielzahl von Blasstationen 8 angeordnet, wobei jede dieser Blasstationen zwei Seitenteile 8a und 8b, sowie ein Bodenteil 8c aufweisen, welche in ihrem Inneren einen Hohlraum ausbilden, innerhalb dessen der Kunststoffvorformling zu einem Kunststoffbehältnis expandierbar ist bzw. expandiert wird. Das Bezugszeichen 18 bezieht sich auf eine Blasdüse, welche auf die Mündungen der Kunststoffvorformlinge aufsetzbar ist, um diese durch Beaufschlagung mit Druckluft zu Kunststoffbehältnissen zu expandieren.

Das Bezugszeichen 14 kennzeichnet eine Reckstange, welche in der Richtung P2 beweglich ist, um die Kunststoffvorformlinge zu expandieren. Um die Bewegung zur Reckstange 14 zu erzeugen, ist ein pneumatischer Zylinder 34 vorgesehen. Das Bezugszeichen 4 kennzeichnet eine Kompressoreinrichtung, welche zur Erzeugung der Druckluft dient. Diese Druckluft wird ausgehend von der Kompressoreinrichtung über eine Zuführleitung 36 hier in einen zentralen Kanal 32 geführt, von dem aus wiederum die einzelnen Blasstationen mit Druckluft versorgt werden können. Dabei wäre es möglich, dass mehrere derartige Kanäle bzw. Ringkanäle vorgesehen sind, von denen aus wiederum die einzelnen Blasstationen z. B. mit unterschiedlichen Druckniveaus versorgt werden. Die Zuführleitung 36 weist dabei eine Länge auf, welche kleiner ist als 14m, bevorzugt kleiner als 12m, bevorzugt kleiner als 10m, bevorzugt kleiner als 8m und besonders bevorzugt kleiner als 6m.

Bei den hier gezeigten Ausführungsformen ist die Kompressoreinrichtung auf dem Blasrad und damit drehbar angeordnet. Das Bezugszeichen 42 kennzeichnet ein Antriebsrad, welches den Kompressor antreibt und welches wiederum in Eingriff steht mit einem stationär angeordneten Lagerteil 24. Genauer kann dieser Lagerteil 24 hier ein Zahnrad mit Innenverzahnung aufweisen, welches feststeht, und dem gegenüber drehend ein zweites Lagerteil 22 gelagert ist. An diesem zweiten Lagerteil 22 ist wiederum das Blasrad 12 angeordnet, sodass dieses insgesamt drehbar ist. Auf diese Weise wird durch die Drehbewegung des Blasrades 12 der Kompressor mitbewegt und auf diese Weise über sein Antriebsrad 42 angetrieben.

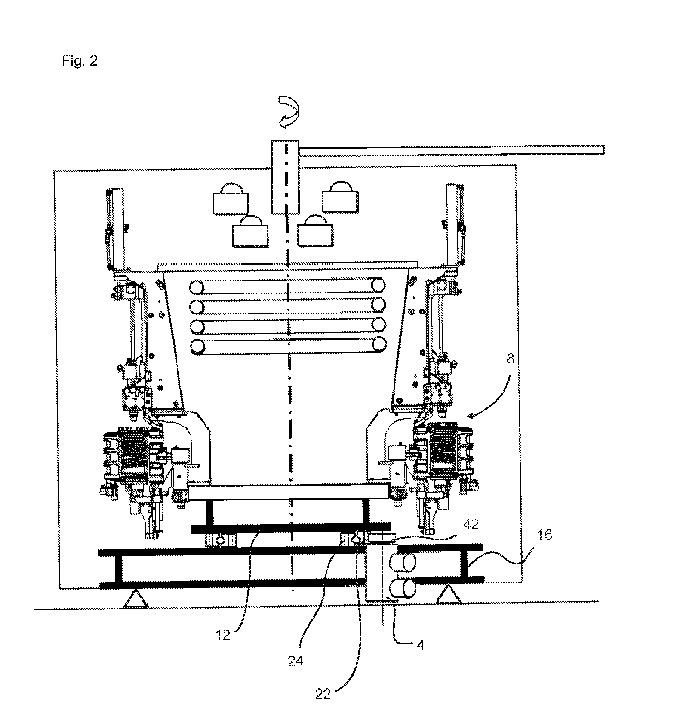

Fig. 2 zeigt eine weitere Ausführungsform einer erfindungsgemäßen Vorrichtung. Bei dieser Ausführungsform ist der Kompressor 4 hier stationär, beispielsweise an dem Träger 16 der Vorrichtung angeordnet und wird dabei ebenfalls durch die Drehbewegung des Blasrades 12 angetrieben, wobei hier jedoch ein Zahnrad 22 mit Außenverzahnung vorgesehen sein kann, welches wiederum das Antriebsrad 42 des Kompressors 4 antreibt. Die von der Kompressoreinrichtung 4 erzeugte Druckluft kann, beispielsweise über einen Drehverteiler zu den einzelnen Blasstationen geleitet werden.

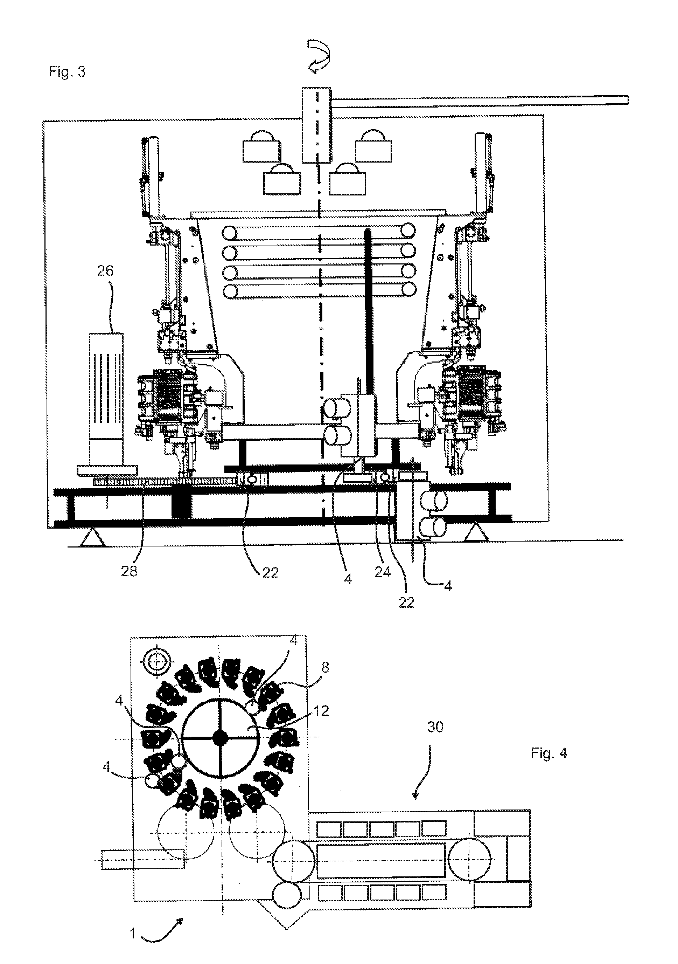

Bei der in Fig. 3 gezeigten Ausführungsform ist sowohl eine Kompressoreinrichtung an dem Blasrad 12 angeordnet, als auch eine weitere Kompressoreinrichtung 4 stationär. Durch die Drehung des Blasrades 12 werden hier beide Kompressoreinrichtungen angetrieben, und so können beide Kompressoranrichtungen Druckluft erzeugen, um Teile der Blasstationen 8 hiermit zu versorgen.

Das Bezugszeichen 26 bezieht sich hier auf eine Antriebseinrichtung, welche über ein Zahnrad 28 das Zahnrad 22 antreibt und auf diese Weise auch das Blasrad 12 antreibt.

Fig. 4 zeigt eine Darstellung einer Anlage mit einer erfindungsgemäßen Vorrichtung 1. Hier ist der Vorrichtung 1, wie aus dem Stand der Technik bekannt, eine Heizeinrichtung 30 vorgeschaltet, durch welche hindurch Kunststoffvorformlinge geführt und auf diese Weise erwärmt werden. Bei dieser Heizeinrichtung handelt es sich hier um einen Infrarotofen, durch den hindurch die Kunststoffvorformlinge bewegt werden. Falls gewünscht, könnte auch eine warme Abluft dieser Heizeinrichtung 30 den Kompressoreinrichtungen 4 zugeführt werden, damit diese diese erwärmte Luft auf eine höhere Druckstufe bringen. Anstelle einer Infrarotheizeinrichtung wäre es jedoch auch möglich, Mikrowellenheizeinrichtungen oder Kombinationen aus Mikrowellenheizeinrichtungen und Infrarotheizeinrichtungen vorzusehen.

Bei dieser Ausführungsform sind zwei Kompressoreinrichtungen 4 auf dem Blasrad 12 vorgesehen, sowie eine weitere Kompressoreinrichtung 4 stationär und damit außerhalb des Blasrades.

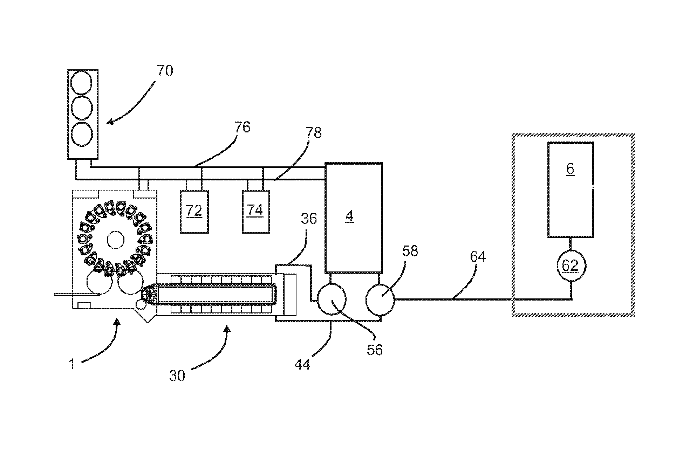

Fig. 5 zeigt eine weitere Ausführungsform einer erfindungsgemäßen Anlage. Bei dieser Ausführungsform ist eine weitere Kompressoreinrichtung 6 vorgesehen, welche hier dazu dient, um einen Niederdruck, beispielsweise zwischen 5 und 10 bar zu erzeugen und diesen an die Kompressoreinrichtung 4 zuzuführen. Das Bezugszeichen 62 kennzeichnet dabei einen Druckspeicher, der sich an die weitere Kompressoreinrichtung 6 anschließt. Über die Zuführleitung 64 wird der Druck in ein Reservoir 58 geführt und kann von dort aus in die Kompressoreinrichtung 4 gelangen. Weiterhin ist auch eine Rückführleitung 44 vorgesehen, über welche von der Blasmaschine Druck von beispielsweise 5 bis 10 bar ebenfalls in das Reservoir 58 und damit in die Kompressoreinrichtung 4 geführt werden kann. Diese Kompressoreinrichtung 4, die hier als Booster ausgeführt ist, verstärkt den Druck und führt ihn über eine Zuführleitung 36 und ein Reservoir 56 der Blasmaschine zu. Der minimale Eingangsdruck für die Kompressoreinrichtung 4 liegt hier bei zirka 6 bar. Das Luftrecycling über die Rückführleitung 44 erfolgt hier bei einem Druck von zirka 8 bar. Das Niederdrucknetz, bestehend aus der Kompressoreinrichtung 6 und dem Reservoir 62, wird hier vorteilhaft begrenzt auf einen Druck von zirka 7,5 bar, wobei der Druck jedoch mindestens 6,5 bar beträgt. Diese weitere Kompressoreinrichtung 6 kann dabei weiter beabstandet sein von der Blasmaschine 1 und beispielsweise in einem separaten Lagerraum angeordnet sein.

Solange während der Produktion das Luftrecyclingsystem der Steckblasmaschine ausreichend Volumen liefert, d.h. Druck im Bereich von 8 bar, fällt der Druck nicht unter 7,5 bar an dem Eingangsreservoir 58. Auf diese Weise ist es möglich, die recycelte Luft direkt für die Kompressoreinrichtung 4, d.h. dem Booster, zu verwenden.

Sollte das Volumen nicht mehr ausreichend sein, sinkt der Druck in dem Reservoir unter 7,5 bar. In diesem Fall wird über ein Ventil Druckluft aus dem Niederdrucknetz, d.h. der Kompressoreinrichtung 6 entnommen. Dies führt dazu, dass sich der Druck je nach Abnahme in einen Bereich zwischen 6,5 und 7,5 bar einpendelt. Da jedoch der Druck von 6 bar nicht unterschritten wird, wird die Kompressoreinrichtung 4 immer ausreichend mit Druckluft versorgt.

Auf diese Weise ist es möglich, stets recycelte Druckluft effizient mit einer Verbindung zu nutzen, sodass auch hier die Kompressoreinrichtung 4 direkt neben der Steckblasmaschine angeordnet werden kann, wodurch wiederum eine geringe Verrohrung bedingt wird. Auch kann das Ansaugen von Fremdluft verhindert werden.

Der Arbeitsbereich der Kompressoreinrichtung liegt, wie oben erwähnt, bei zirka 6 bar, wobei folglich in einem Druckbereich zwischen 6,5 und 7,5 bar das Niederdrucknetz diesen Druck zur Verfügung stellt und damit als zusätzliche Versorgung dient, wenn das Luftrecyclingvolumen zu klein ist. In dem oben erwähnten Bereich zwischen 8 und 9 bar arbeitet das Druckluftrecycling über die Rückführleitung 44.

Dabei handelt es sich hier bei der eingangs beschriebenen Kompressoreinrichtung, welche nahe an der Blasmaschine angeordnet ist, um eine solche Einrichtung, welche, ausgehend von einem bestimmten Druckniveau, welches über dem atmosphärischen Druck liegt, eine Druckluftverstärkung bewirkt.

Das hier dargestellte System ist bei Streckblasmaschinen mit einem hohen Recyclingpotenzial besonders vorteilhaft, wie beispielsweise Streckblasmaschinen, die für einen Hotfill-Prozess dienen. Auch kann dieses System bei Fabriken oder Abfüllern mit mehreren Anlagen verwendet werden, da hier große Mengen an recycelter Luft anfallen, was energetisch zum Vorteil genutzt werden kann.

Das Bezugszeichen 70 bezeichnet ein Temperiersystem zum Temperieren der Blasmaschine. Dabei bezeichnen im Einzelnen die Bezugszeichen 72 und 74 zwei Temperiergeräte, beispielsweise zum Erwärmen oder Abkühlen bestimmter Anlagenteile. Die Bezugszeichen 76 und 78 kennzeichnen Verbindungsleitungen, die ein Temperiermedium von dem Kühler 70 den jeweiligen Temperiergeräten 72 und 74 und auch der Streckblasmaschine 1 zuführen. Daneben können auch Verbindungen zu der Kompressoreinrichtung 4 existieren, wodurch auch die Kompressoreinrichtung 4 in die Temperierung der Anlage mit eingebunden wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung, Streckblasmaschine
- 4, 6: Kompressoreinrichtung
- 8: Blasstationen
- 8a, 8b: Seitenteile
- 8c: Bodenteil
- 12: Blasrad
- 14: Reckstange
- 16: Träger
- 18: Blasdüse
- 22: Lagerteil, Zahnrad
- 24: Lagerteil
- 26: Antriebseinrichtung
- 28: Zahnrad
- 30: Heizeinrichtung
- 32: Kanal, zweites Lagerteil

- 34: Zylinder
- 36: Zuführleitung
- 42: Antriebsrad
- 44: Rückführleitung
- 56, 58: Reservoir
- 62: Druckspeicher
- 64: Zuführleitung
- 70: Temperiersystem, Kühler
- 72, 74: Temperiergeräte
- 76, 78: Verbindungsleitungen
- P1: Pfeil
- P2: Richtung

## Patentansprüche

1. Vorrichtung (1) zum Umformen von Kunststoffvorformlingen zu Kunststoffbehältnissen mit mindestens einer Blasstation (8), die einen Hohlraum ausbildet, in dessen Innerem die Kunststoffvorformlinge zu Kunststoffbehältnissen (10) umformbar sind, mit einer Druckluftzuführung, welche wenigstens einem Element der Blasstation (8) die Druckluft zuführt und mit einer Kompressoreinrichtung (4) zur Erzeugung der Druckluft,
**dadurch gekennzeichnet, dass**
die Kompressoreinrichtung (4) derart in einer Umgebung der Vorrichtung (1) angeordnet ist, dass eine Strömungsverbindung (6) zwischen der Kompressoreinrichtung (4) und der Blasstation (8) kürzer als 15m ist.

2. Vorrichtung (1) nach Anspruch 1,
**dadurch gekennzeichnet, dass**
die Vorrichtung (1) eine Vielzahl von Blasstationen (8) aufweist, welche an einem drehbaren Träger (12) angeordnet sind und die Kompressoreinrichtung diese Blasstationen (8) mit Druckluft versorgt.

3. Vorrichtung (1) nach Anspruch 2,
**dadurch gekennzeichnet, dass**
die Kompressoreinrichtung (4) an dem drehbaren Träger (12) angeordnet ist.

4. Vorrichtung (1) nach wenigstens einem der vorangegangenen Ansprüche,
**dadurch gekennzeichnet, dass**
die Kompressoreinrichtung (4) durch eine Drehbewegung des Trägers (12) angetrieben wird.

5. Vorrichtung (1) nach wenigstens einem der vorangegangenen Ansprüche,
**dadurch gekennzeichnet, dass**
wenigstens eine Blasstation (8) eine Reckstange (14) zum Dehnen der Kunststoffvorformlinge aufweist und eine Bewegung dieser Reckstange wenigstens teilweise durch mit der Kompressoreinrichtung (4) erzeugte Druckluft angetrieben wird.

6. Vorrichtung (1) nach wenigstens einem der vorangegangenen Ansprüche,
**dadurch gekennzeichnet, dass**
die Kompressoreinrichtung (4) wenigstens ein Steuerventil mit Druckluft versorgt.

7. Vorrichtung (1) nach wenigstens einem der vorangegangenen Ansprüche,
**dadurch gekennzeichnet, dass**
die Kompressoreinrichtung (4) Blasluft zum Expandieren der Kunststoffvorformlinge liefert.

8. Vorrichtung (1) nach wenigstens einem der vorangegangenen Ansprüche,
**dadurch gekennzeichnet, dass**
die Vorrichtung (1) eine weitere Kompressoreinrichtung (6) aufweist, wobei eine Strömungsverbindung zwischen dieser weiteren Kompressoreinrichtung (6) und der Kompressoreinrichtung (4) besteht.

9. Verfahren zum Umformen von Kunststoffvorformlingen zu Kunststoffbehältnissen, wobei die Kunststoffvorformlinge innerhalb wenigstens einer Blasstation (8) mit Druckluft beaufschlagt und zu den Kunststoffbehältnissen umgeformt werden und wobei der Blasstation (8) Druckluft zugeführt wird und eine Kompressoreinrichtung (4) die Druckluft erzeugt
**dadurch gekennzeichnet, dass**
die Druckluft zwischen der Kompressoreinrichtung (4) und der Blasstation (8) entlang einer Strömungsverbindung geführt wird, welche kleiner als 15m ist.

10. Verfahren nach Anspruch 8,
**dadurch gekennzeichnet, dass**
die Druckluft einer Zentralleitung zugeführt wird und von der Zentralleitung an eine Vielzahl von Blasstationen (8) geführt wird.

11. Verfahren nach Anspruch 8,
**dadurch gekennzeichnet, dass**
die Kompressoreinrichtung (4) durch eine Transportbewegung der Blasstation (8) und/oder der Kunststoffbehältnisse angetrieben wird.

12. Verfahren nach wenigstens eine der vorangegangenen Ansprüche,
**dadurch gekennzeichnet, dass**
wenigstens eine weitere Kompressoreinrichtung (6) die Kompressoreinrichtung (4) mit Druckluft versorgt.
